(19) Europäisches Patentamt
European Patent Office
Office européen des brevets

(11) EP 0 881 636 A1

# (12) EUROPEAN PATENT APPLICATION

(43) Date of publication:
**02.12.1998 Bulletin 1998/49**

(51) Int. Cl.$^6$: **G11B 7/24**

(21) Application number: **98109743.9**

(22) Date of filing: **28.05.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.05.1997 JP 138795/97**

(71) Applicant:
**MITSUI CHEMICALS, INC.**
**Tokyo (JP)**

(72) Inventors:
- **Taniguchi, Yoshiteru**
**Yokohama-shi, Kanagawa (JP)**
- **Hirose, Sumio**
**Yokohama-shi, Kanagawa (JP)**
- **Umehara, Hideki**
**Yokohama-shi, Kanagawa (JP)**
- **Takuma, Keisuke**
**Yokohama-shi, Kanagawa (JP)**
- **Misawa, Tsutami**
**Yokohama-shi, Kanagawa (JP)**

(74) Representative:
**Zumstein, Fritz, Dr. et al**
**Zumstein & Klingseisen**
**Patentanwälte**
**Bräuhausstrasse 4**
**80331 München (DE)**

## (54) Optical recording medium

(57) An optical recording medium comprising at least a transparent substrate having grooves, a recording layer absorbing laser beams provided on the substrate directly or via another layer and a reflective layer of metal provided on the said recording layer directly or via another layer, wherein the said recording layer contains as a main component a complex of an azo compound represented by the following Formula (1) with metal; the above complex has a decomposition-starting temperature Tb [°C] falling in a range of $250 \leqq Tb \leqq 350$; and the melting point thereof Tm [°C] satisfies the following equation:

$$Tb - 50 \leqq Tm$$

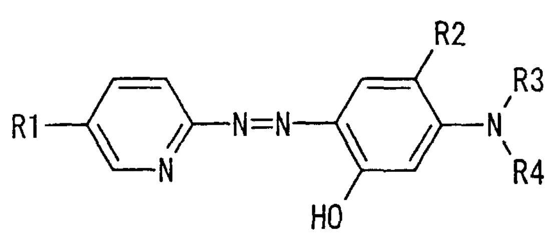

(1)

wherein $R_1$ and $R_2$ each represent H, a halogen atom, a cyano group, a hydroxy group, a nitro group, a carboxy group, a substituted or unsubstituted alkyl, alkoxy, amino, alkylthio or phenylthio group; $R_3$ and $R_4$ each represent H, a substituted or unsubstituted alkyl group, an aryl group, an aralkyl group or an alkenyl group; and $R_3$ and $R_4$ may form a ring via a linkage group.



Printed by Xerox (UK) Business Services
2.16.6/3.4

## Description

BACKGROUND OF THE INVENTION

1. Field of the Invention

The present invention relates to an optical recording medium comprising a recording layer and a reflective layer provided on a transparent substrate, specifically to an optical recording medium capable of recording at a high density.

2. Description of the Related Art

A recordable optical recording medium which has a recording layer comprising a dye and is provided with a metallic reflective layer on the recording layer in order to increase the reflectance is disclosed in, for example, Optical Data Storage 1989 Technical Digest Series, Vol. 1, 45 (1989), and media using cyanine dyes and phthalocyanine dyes in recording layers are available in the market as CD-R media.

These media are characterized by that they can record with a semiconductor laser of 780 nm and can reproduce with commercial CD players and CD-ROM players installed a semiconductor laser of 780 nm.

However, these media have a recording capacity of only about 650 MB, and when they are used to record a large volume of information such as a digital animation, they have a recording time as short as 15 minutes or less. Further, if conventional media are miniaturized in order to meet the situation that miniaturization of equipment goes on, the capacities would further run short. In the conventional CD-R media described above, recording and reproduction are carried out by means of semiconductor lasers having a wavelength of about 780 nm. In recent years, semiconductor lasers having a wavelength of 630 to 660 nm have been developed and make it possible to record and/or reproduce at a higher density, and an optical recording medium in which animations of high quality are recorded for 2 hours in the medium having a diameter of 120 mm has been developed as DVD. This medium has a recording capacity of 4.7 GB/plane but is a read-only medium which is produced by transferring pits on a substrate. Accordingly, recordable optical recording media having a large capacity close to a recording capacity of read-only DVD are desired.

Incidentally, a laser beam spot diameter used for recording in DVD-R is smaller than a conventional laser beam spot diameter used for recording in CD-R, but as compared with a recording density in CD-R, a recording density in DVD-R increases more than expected from an increase in the recording density due to the fact that the laser beam spot diameter becomes smaller. Accordingly, in such media, smaller pits than the beam spot diameters have to be accurately formed in recording as compared with CD-R. However, when a recording density is high, there are problems that the jitter of the shortest pit is raised because the influences of heat interference between pits in recording and expansion of recording pits toward the adjacent trucks are large. Accordingly, when a recording density is high relative to a beam spot diameter, it is important to reduce such problems.

On the other hand, optical recording media having recording layers comprising metal complexes of azo compounds having a nitrogen-containing hetero ring are disclosed in Japanese Patent Publication No. Hei 5-67438 and Japanese Patent Publication No. Hei 7-71868. In these publications, however, only recording in conventional near infrared laser wavelengths is described, and nothing is disclosed regarding various conditions for achieving high density recording relative to a beam spot diameter.

Further, prescriptions of a decomposition temperature of a recording film are disclosed in Japanese Patent Application Laid-Open No. Hei 2-206588, but the application intends for avoiding damage by reproducing light, and nothing is referred to regarding the influence to the formation of pits suitable for high-density recording. Further, disclosed in Japanese Patent Application Laid-Open No. Hei 4-259593 are prescriptions regarding a temperature difference between a melting point and a decomposition point of a recording film for the purpose of controlling the form of recording pits. However, this premises a cyanine dye film, and a specific effect in metal complexes of azo compounds having nitrogen-containing hetero rings is not referred to at all.

An object of the present invention is to provide a medium capable of carrying out good recording and reproducing of signals even at a high recording density relative to a beam spot diameter as is the case with DVD-R.

SUMMARY OF THE INVENTION

The present inventors have continued intensive investigations regarding the problems described above and thus have completed the present invention.

That is, the present invention relates to:

(1) An optical recording medium comprising at least a transparent substrate having grooves, a recording layer absorbing laser beams provided on the substrate directly or via another layer and a reflective layer of metal provided on the recording layer directly or via another layer, wherein the said recording layer contains as a main component a complex of an azo compound represented by the following Formula (1) with metal; the said complex has a decomposition-starting temperature Tb [°C] falling in a range of $250 \leqq Tb \leqq 350$; and the melting point thereof Tm [°C] satisfies the following equation:

$$Tb - 50 \leqq Tm$$

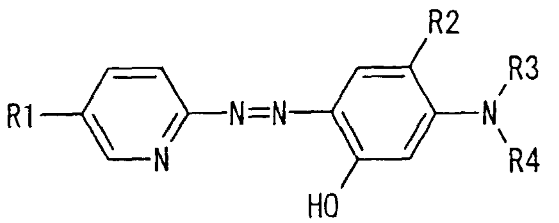

(1)

wherein $R_1$ and $R_2$ represent independently a hydrogen atom, a halogen atom, a substituted or unsubstituted alkyl group having 1 to 4 carbon atoms, a substituted or unsubstituted alkoxy group having 1 to 4 carbon atoms, a cyano group, a substituted or unsubstituted amino group, a hydroxy group, a nitro group, a carboxy group, a substituted or unsubstituted alkylthio group having 1 to 4 carbon atoms, or a substituted or unsubstituted phenylthio group; $R_3$ and $R_4$ represent independently a hydrogen atom, a substituted or unsubstituted alkyl group having 1 to 4 carbon atoms, a substituted or unsubstituted aryl group, a substituted or unsubstituted aralkyl group, or a substituted or unsubstituted alkenyl group; and $R_3$ and $R_4$ may form with the nitrogen atom, to which they are attached, a 5 membered ring or 6 membered ring via a linkage group which may contain a nitrogen atom, an oxygen atom or a sulfur atom.

(2) the optical recording medium as described in the above item (1), wherein the metal in the complex of the azo compound represented by Formula (1) with metal is divalent, and

(3) the optical recording medium as described in the above item (1) or (2), wherein recording and reproduction can be carried out at a laser wavelength of 630 to 660 nm using an objective lens having a numerical aperture of $0.6 \pm 0.05$.

In the present invention, there can be provided an optical recording medium containing a dye in a recording layer, wherein good recording and reproduction can be carried out at a high density relative to laser beam spot diameters by limiting the kind of the dye contained in the recording layer and the decomposition-starting temperature and the melting point thereof.

DETAILED DESCRIPTION OF THE PREFERRED EMBODIMENTS

The optical recording medium of the present invention comprises a transparent substrate, a recording layer absorbing laser beams provided on the substrate and a reflective layer of metal provided on the said recording layer, and the recording layer contains as a main component a complex (metal complex of an azo compound) of a specific azo compound with metal, wherein the complex has a decomposition-starting temperature and a melting point each of which falls in a certain range or decompose at a decomposition-starting temperature falling in a certain range without passing through melting.

In optical recording, the thermal decomposition characteristic of the recording layer exerts a large influence on the recording characteristics of the optical recording medium. In particular, when a high recording density relative to a laser beam spot diameter is required as is the case with DVD-R, selection of a recording layer is important.

In the present invention, an organic dye is used for the recording layer, and the dye comprises the metal complex of the azo compound represented by Formula (1) described above as a main component.

In $R_1$ and $R_2$ of Formula (1), the halogen atom includes fluorine, chlorine, bromine and iodine.

As regards the number of carbon atoms referred to above in connection with the definition of formula (1) and also that referred to in the following description as well as in the claims, whenever the number of carbon atoms of a specific radical is mentioned, it is directed to the total number of carbon atoms including, if present, also that of the substituents.

The substituted or unsubstituted alkyl group having 1 to 4 carbon atoms is a linear or branched alkyl group. The substituent includes an alkoxy group, an alkoxyalkoxy group, an alkoxyalkoxyalkoxy group, an alkoxycarbonyl group, an alkoxycarbonyloxy group, an alkoxyalkoxycarbonyloxy group, a hydroxy group, a hydroxyalkoxy group, a hydroxyalkoxyalkoxy group, a cyano group, an acyloxy group, an acyloxyalkoxy group, a halogen atom, a sulfone group, an alkylcarbonylamino group, an alkylsulfonamino group, a sulfonamide group, an alkylamino group, an amino group and an alkylsulfone group.

The linear or branched alkyl group is an alkyl group having 1 to 4 carbon atoms, and considering processability for coating on polycarbonate, acryl, epoxy and polyolefin substrates, it includes methyl, ethyl, n-propyl, iso-propyl, n-butyl, sec-butyl and tert-butyl.

The alkoxyalkyl group includes groups having 2 to 4 carbon atoms such as methoxymethyl, ethoxymethyl, propoxymethyl, methoxyethyl and ethoxyethyl.

Examples of the alkoxyalkoxyalkyl group include methoxymethoxymethyl and methoxymethoxyethyl.

Examples of the alkoxyalkoxyalkoxyalkyl group include methoxymethoxymethoxymethyl.

Examples of the alkoxycarbonylalkyl group include methoxycarbonylmethyl, ethoxycarbonylmethyl and methoxycarbonylethyl.

Examples of the alkoxycarbonyloxyalkyl group include methoxycarbonyloxyethyl.

Examples of the alkoxyalkoxycarbonyloxyalkyl group include methoxymethoxycarbonyloxymethyl.

Examples of the hydroxyalkyl group include 1-hydroxyethyl, 2-hydroxyethyl, 2-hydroxy-3-methoxypropyl, 2-hydroxy-3-chloropropyl, 2-hydroxypropyl and 2-hydroxybutyl.

Examples of the hydroxyalkoxyalkyl group include hydroxyethoxyethyl, and examples of the hydroxyalkoxyalkoxyalkyl group include hydroxymethoxymethoxyethyl.

Examples of the cyanoalkyl group include 2-cyanoethyl, 4-cyanobutyl, 2-cyano-3-methoxypropyl, 2-cyano-3-chloropropyl, 2-cyanopropyl and 2-cyanobutyl.

Examples of the acyloxyalkyl group include acetoxyethyl, and examples of the acyloxyalkoxyalkyl group include acetoxymethoxymethyl.

Examples of the halogenated alkyl group include chloromethyl, chloroethyl, 2,2,2-trifluoroethyl, trifluoromethyl, bromomethyl and iodomethyl.

Examples of the sulfonalkyl group include sulfonmethyl, sulfonethyl and sulfonpropyl.

Examples of the alkylcarbonylaminoalkyl group include methylcarbonylaminoethyl.

Examples of the alkylsulfonaminoalkyl group include methylsulfonaminoethyl and ethylsulfonaminoethyl.

Examples of the sulfonamidealkyl group include sulfonamidemethyl, sulfonamideethyl and sulfonamidepropyl.

Examples of the alkylaminoalkyl group include N-methylaminomethyl and N,N-dimethylaminomethyl.

Examples of the aminoalkyl group include aminomethyl, aminoethyl and aminopropyl.

Examples of the alkylsulfonalkyl group include methylsulfonmethyl, ethylsulfonmethyl, methylsulfonethyl, ethylsulfonethyl, 2,2,3,3-tetrafluoropropylsulfonmethyl and 2,2,3,3-tetrachloropropylsulfonmethyl.

Examples of the substituted or unsubstituted alkoxy group having 1 to 4 carbon atoms are alkoxy groups having the same substituents as those of the alkyl group given above and include preferably lower alkoxy groups such as methoxy, ethoxy, n-propoxy, iso-propoxy, n-butoxy, iso-butoxy, sec-butoxy and t-butoxy.

The substituted or unsubstituted amino group is preferably an amino group or a substituted amino group having 1 to 2 alkyl groups each of which has 1 to 4 carbon atoms.

Examples of the substituted or unsubstituted amino group are apart from the amino group alkylamino groups having the same substituents as those of the alkyl group given above and include preferably lower alkylamino groups such as N-methylamino, N,N-dimethylamino, N,N-diethylamino, N,N-dipropylamino and N,N-dibutylamino.

Examples of the substituted or unsubstituted alkylthio group having 1 to 4 carbon atoms are alkylthio groups which may have the same substituents as those of the alkyl group given above and include preferably alkylthio groups having 1 to 4 carbon atoms such as methylthio, ethylthio, n-propylthio, iso-propylthio, n-butylthio, iso-butylthio, sec-butylthio, t-butylthio and methylcarboxylethylthio.

The substituted or unsubstituted phenylthio group is preferably a group having 6 to 10 carbon atoms.

Examples of the substituted or unsubstituted phenylthio group are phenylthio groups which may have the same substituents as those of the alkyl group given above and include phenylthio, methylphenylthio, ethylphenylthio and propylphenylthio. Further, included are phenylthio groups substituted with hydroxyl groups, amino groups, nitro groups, carboxyl groups and halogen atoms.

Preferable for $R_1$ are a chlorine atom, a bromine atom, a cyano group or a trifluoromethyl group. Also preferable for $R_2$ are a hydrogen atom, a methyl group, an ethyl group, an isopropyl group, a t-butyl group, a methoxy group, an ethoxy group, an isopropoxy group, a t-butoxy group, a methylthio group, an ethylthio group, an isopropylthio group, a t-butylthio group, a phenylthio group, a methylphenylthio group or an ethylphenylthio group.

In $R_3$ and $R_4$ of Formula (1), examples of the substituted or unsubstituted alkyl group include those of the alkyl group given above.

The substituted or unsubstituted aryl group and the substituted or unsubstituted aralkyl group are preferably groups having 6 to 12 carbon atoms. The aryl portion of the substituted or unsubstituted aryl group or that of the substituted or unsubstituted aralkyl group preferable includes phenyl and naphthyl.

Examples of the substituted or unsubstituted aryl group are aryl groups which may have the same substituents as those of the alkyl group and phenylthio group given above and include preferably phenyl, nitrophenyl, cyanophenyl, hydroxyphenyl, methylphenyl, trifluoromethylphenyl, naphthyl, nitronaphthyl, cyanonaphthyl, hydroxynaphthyl, methylnaphthyl and trifluoromethylnaphthyl.

Examples of the substituted or unsubstituted aralkyl group are aralkyl groups which may have the same substituents as those of the aryl group given above and include preferably benzyl, nitrobenzyl, cyanobenzyl, hydroxybenzyl, methylbenzyl, trifluoromethylbenzyl, naphthylmethyl, nitronaphthylmethyl, cyanonaphthylmethyl, hydroxynaphthylmethyl, methylnaphthylmethyl and trifluoromethylnaphthylmethyl.

The substituted or unsubstituted alkenyl group is preferably a group having 2 to 6 carbon atoms.

Examples of the substituted or unsubstituted alkenyl group are alkenyl groups which may have the same substituents as those of the aryl group given above and include preferably lower alkenyl groups such as propenyl, 1-butenyl, iso-butenyl, 1-pentenyl, 2-pentenyl, 2-methyl-1-butenyl, 3-methyl-1-butenyl, 2-methyl-2-butenyl, 2,2-dicyanovinyl, 2-cyano-2-methylcarboxyvinyl and 2-cyano-2-methylsulfonevinyl.

$R_3$ and $R_4$ may form with the nitrogen atom, to which they are attached, a 5 membered ring or 6 membered ring via a linkage group which may contain a nitrogen atom, an oxygen atom or a sulfur atom.

This 5 membered ring or 6 membered ring may have a substituent and the substituent includes a halogen atom, a methyl group, an ethyl group, a methoxy group, an ethoxy group, a methylamino group, an ethylamino group, a methylthio group and an ethylthio group.

The linkage group linking $R_3$ with $R_4$ includes substituted or unsubstituted groups forming six-membered rings together with $R_3$ and $R_4$, and comprising carbon atoms, oxygen atoms and nitrogen atoms. Examples in which $R_3$ and $R_4$ formed a ring include $-CH_2CH_2OCH_2CH_2-$, $-CH_2CH_2NHCH_2CH_2-$, $-CH_2CH_2N(CH_3)CH_2CH_2-$, $-CH_2C(=O)OC(=O)CH_2-$, $-CH_2C(=O)NHC(=O)CH_2-$, $-CH_2C(=O)N(CH_3)C(=O)CH_2-$ and $-CH_2CH_2CH_2CH_2CH_2-$.

The azo compound of the present invention represented by Formula (1) can be produced by known methods. That is, an amine component represented by the following Formula (2) is diazotized and added to a solution of a coupling component represented by the following formula (3) to be subjected to a coupling reaction, whereby the azo compound represented by Formula (1) is obtained:

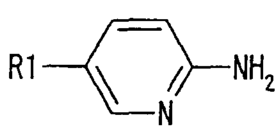

(2)

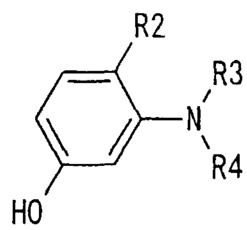

(3)

wherein $R_1$ to $R_4$ are the same as those in Formula (1).

Further, the foregoing metal complex of the azo compound used in the present invention can be produced according to known methods, for example, a method described in Furukawa; Analytica Chimica Acta., 140 (1982), 281 to 289. Preferred as the metal forming the metal complex of the azo compound are, for example, metals such as nickel, cobalt, iron, ruthenium, rhodium, palladium, copper, osmium, iridium, platinum, zinc, magnesium and manganese, and particularly preferred are divalent metals such as nickel, cobalt, copper, palladium, iron, zinc and manganese. These metals coordinate to the azo compound in the form of an ion to form complexes.

The metal complexes of the azo compound represented by Formula (1) may be either a complex of sole azo compound or complexes of plural azo compounds.

In the present invention, the recording layer contains the metal complex of the azo compound described above as a main component, and those which may be mixed are a dye such as a cyanine dye, a phthalocyanine dye, a pyrromethene dye and a dipyrromethene dye, a quencher such as a dithiol complex, and a binder such as nitrocellulose, cellulose acetate, a ketone resin, an acryl resin, polyvinylbutyral, polycarbonate and polyolefin.

The azo complex used in the present invention has a decomposition-starting temperature Tb [°C] falling in a range of $250 \leqq Tb \leqq 350$ and a melting point Tm [°C] falling in a range of $Tb - 50 \leqq Tm$. In the present invention, included therein are those which decompose at the said decomposition-starting temperature without having a melting point observed (that is, without passing through melting). The decomposition-starting temperature defined here is a temperature at which the dye is reduced in a weight by 10 % when the dye is heated at 10°C/minute from room temperature under an aerial atmosphere.

If the azo complex having a Tb of lower than 250°C is used for the recording layer, thermal decomposition in the recording layer is liable to spread to the circumference, and the jitter is deteriorated due to the cause that a short recording interval can not stably be formed or recording pits largely expand to the adjacent tracks. Accordingly, said complex

is not preferred. On the other hand, if the decomposition-starting temperature exceeds 350°C, it is disadvantageous in terms of a recording sensitivity, and therefore such complex is also not preferred.

The closer the melting point to the decomposition-starting temperature is, the more advantageous. If the melting point is lower than the decomposition-starting temperature by 50°C or more, the molten part of the recording layer is liable to expand in the circumference of recording pits, and an influence is exerted on the adjacent pits and adjacent tracks to cause a deterioration in the jitter.

In the present invention, the recording layer containing the dye described above is provided on the substrate directly or via another inorganic or organic layer (subbing layer). The recording layer has a film thickness of 40 to 300 nm, preferably 60 to 200 nm. Methods of providing the above recording layer include, for example, a spin coating method, a dipping method, a spray method and a vapor deposition method, and the spin coating method is preferred.

Solvents which do not damage the substrate are preferred as a coating solvent used for forming a film by the spin coating method. The preferred solvents include, for example, aliphatic or alicyclic hydrocarbon solvents such as hexane, heptane, octane, decane, cyclohexane, methylcyclohexane and dimethylcyclohexane; ether solvents such as diethyl ether, dibutyl ether and diisopropyl ether; alcohol solvents such as methyl alcohol, ethyl alcohol, isopropyl alcohol, allyl alcohol and methyl cellosolve; and halogenated solvents such as carbon tetrachloride and tetrafluoropropanol.

In the present invention, a reflective layer is provided on the recording layer described above. Used as materials for the reflective layer are metals such as gold, silver, aluminum, copper and platinum and alloys containing these metals, and gold, aluminum, silver and alloys containing these metals as a main component is preferred from the viewpoint of a reflectance and a durability. The reflective layer has usually a film thickness of 40 to 300 nm, preferably 60 to 200 nm. Methods of forming the reflective layer include, for example, a vacuum evaporation method, a spattering method and an ion plating method.

In the present invention, an intermediate layer may be provided between the recording layer containing the dye described above and the reflective layer in order to improve the characteristics such as a reflectance, a degree of modulation and a jitter. Materials for forming the intermediate layer include inorganic dielectric substances, polymers and dyes.

An objective lens used in the present invention has a large numerical aperture, and therefore the substrate has preferably a thickness of 0.5 to 0.8 mm in order to reduce an aberration. In this case, the medium is used by bonding two sheets thereof with an adhesive in order to improve the strength and the mechanical characteristics. In bonding, they can be stuck without forming a protective layer on the reflective layer or after forming the protective layer. UV ray-curing acryl resins, UV ray-curing epoxy resins and silicone base hard coating resins are used for the protective layer. Further, UV ray-curing acryl resins, UV ray-curing epoxy resins and hot melt adhesives are used as adhesives in sticking.

The optical recording medium thus obtained can record and reproduce stably even at a high recording density relative to a laser beam spot diameter. In particular, good recording and reproduction can be carried out at a laser wavelength of 630 to 660 nm in recording and reproducing and $0.6 \pm 0.05$ of a numerical aperture of an objective lens.

## EXAMPLES

The present invention shall specifically be explained below with reference to examples, but the embodiment of the present invention shall not be restricted thereby.

### Example 1

An Ni complex of an azo dye represented by Formula (4) was applied in a thickness of 160 nm to a grooved face of an injection-molded polycarbonate substrate which has spiral grooves and has a thickness of 0.6 mm and a diameter of 120 mm by a spin coat method to form a recording layer. The said dye has a decomposition-starting temperature of 300°C, and the melting point was not observed.

An aluminum thin film having a thickness of 80 nm was formed as a reflective layer on this recording layer by a spattering method, and then a UV-curing adhesive was applied to this reflective layer. The same substrate of 0.6 mm thick as described above was superposed on this adhesive and rotated at a high speed to remove the surplus adhesive. Then, the substrate was irradiated with UV rays to prepare a bonded optical recording medium.

This optical recording medium was put on a turn table, and EFM-modulated signals having a shortest pit length of 400 nm were recorded thereon by means of a drive installed a semiconductor laser having a wavelength of 640 nm and an objective lens having a numeral aperture of 0.63 while rotating the medium at a linear velocity of 3.5 m/second and controlling the laser beams so as to converge on the recording layer on the grooves through the substrate.

Next, the recorded signals were read out with a drive having a wavelength of 650 nm. In reading out, equalization treatment was carried out.

The jitter value at an optimum recording power at which the jitter is minimized is 6.5 % of a channel bit clock, and

very good recording and reproducing having an error rate of $5 \times 10^{-5}$ was obtained. Further, no bias was observed in the reproduced waveform.

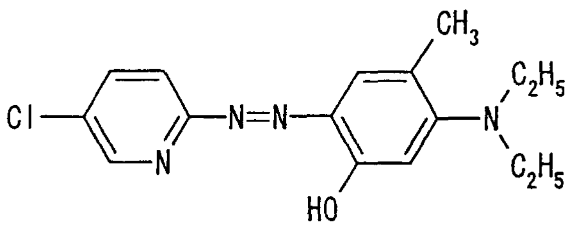

(4)

Examples 2 to 12 and Comparative Examples 1 to 2

Each medium was prepared and evaluated by the same method as in Example 1, except that the recording layer was changed. The kinds of the dyes, the decomposition-starting temperatures and the melting points were summarized in Table 1.

In Table 1, M is a metal element to be coordinated, and the substituents $R_1$ to $R_4$ correspond to Formula (1). The jitter values at a recording power at which the jitters are minimized and the error rates are shown in Table 2.

Comparative Examples 3 to 4

Each medium was prepared and evaluated by the same method as in Example 1, except that cyanine dyes (manufactured by Nippon Kanko Shikiso Kenkyusho) represented by the following Formula (5) (Comparative Example 3) and Formula (6) (Comparative Example 4) were used for the recording layers. The decomposition-starting temperatures and the melting points are shown in Table 1. The jitter values at a recording power at which the jitters are minimized and the error rates are shown in Table 2.

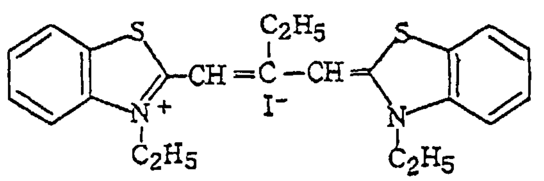

(5)

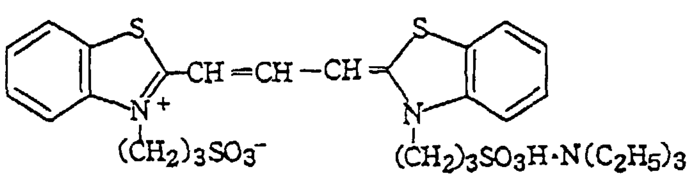

(6)

Table 1

| | Substituents | | | | | Decomposition starting temperature (°C) [Tb] | Melting point (°C) [Tm] |
|---|---|---|---|---|---|---|---|
| | M | $R_1$ | $R_2$ | $R_3$ | $R_4$ | | |
| Example | | | | | | | |
| 1 | Ni | Cl | $CH_3$ | $C_2H_5$ | $C_2H_5$ | 300 | Not observed |
| 2 | Co | Cl | H | $C_4H_9$ | $C_4H_9$ | 280 | ↑ |
| 3 | Mn | Cl | H | i-$C_3H_7$ | i-$C_3H_7$ | 300 | ↑ |
| 4 | Cu | Br | H | $CH_3$ | i-$C_3H_7$ | 300 | ↑ |
| 5 | Ni | H | $CH_3$ | $C_2H_5$ | $C_2H_5$ | 310 | ↑ |
| 6 | Co | H | $OCH_3$ | $C_2H_4OH$ | $C_2H_4OH$ | 290 | ↑ |
| 7 | Mn | H | H | $CH_2OC_2H_5$ | $CH_2OC_2H_5$ | 320 | ↑ |
| 8 | Cu | Br | $C_3H_7$ | $C_4H_9$ | $C_4H_9$ | 270 | 240 |
| 9 | Ni | H | -S-Ph | $C_2H_5$ | $C_2H_5$ | 280 | Not observed |
| 10 | Ni | $CF_3$ | (t)$C_4H_9$ | $C_2H_5$ | $C_2H_5$ | 290 | ↑ |
| 11 | Cu | Cl | -S-$C_4H_9$(t) | $C_4H_9$ | $C_4H_9$ | 280 | ↑ |
| 12 | Cu | $NO_2$ | -O-$C_4H_9$(t) | $C_2H_4OH$ | $C_2H_4OH$ | 280 | ↑ |
| Comparative Example | | | | | | | |
| 1 | Ni | (s)$C_6H_{13}$ | $C_4H_9$ | $C_8H_{17}$ | $C_8H_{17}$ | 260 | 200 |
| 2 | Co(III)Cl | Cl | $CH_3$ | $C_4H_9$ | $C_4H_9$ | 240 | 210 |
| 3 | Formula (5) | | | | | 240 | 210 |
| 4 | Formula (6) | | | | | 315 | 275 |

Table 2

| | Jitter (%) | Error rate |
|---|---|---|
| Example | | |
| 1 | 6.5 | $5 \times 10^{-5}$ |
| 2 | 7.1 | $2 \times 10^{-4}$ |
| 3 | 6.3 | $3 \times 10^{-4}$ |
| 4 | 7.0 | $7 \times 10^{-5}$ |
| 5 | 6.6 | $4 \times 10^{-4}$ |
| 6 | 6.5 | $8 \times 10^{-5}$ |
| 7 | 6.5 | $1 \times 10^{-4}$ |
| 8 | 7.6 | $5 \times 10^{-5}$ |
| 9 | 7.0 | $6 \times 10^{-5}$ |
| 10 | 6.5 | $5 \times 10^{-5}$ |
| 11 | 6.5 | $6 \times 10^{-5}$ |
| 12 | 7.2 | $1 \times 10^{-4}$ |
| Comparative Example | | |
| 1 | 13.0 | $6 \times 10^{-2}$ |
| 2 | 15.3 | $1 \times 10^{-1}$ |
| 3 | 14.5 | $5 \times 10^{-2}$ |
| 4 | 13.5 | $6 \times 10^{-2}$ |

As apparent from the results shown in Table 2, good recording and reproducing was obtained in the examples of the invention, but in the comparative examples, the jitters and the error rates grew large, so that stable reproduction was not obtained.

**Claims**

**1.** An optical recording medium comprising at least a transparent substrate having grooves, a recording layer absorbing laser beams provided on the substrate directly or via another layer and a reflective layer of metal provided on said recording layer directly or via another layer, wherein said recording layer contains as a main component a complex of an azo compound represented by the following Formula (1) with metal; said complex has a decomposition-starting temperature Tb [°C] falling in a range of $250 \leqq Tb \leqq 350$; and the melting point thereof Tm [°C] satisfies the following equation:

$$Tb - 50 \leqq Tm$$

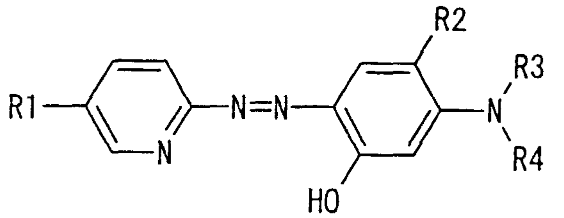

(1)

wherein $R_1$ and $R_2$ represent independently a hydrogen atom, a halogen atom, a substituted or unsubstituted alkyl group having 1 to 4 carbon atoms, a substituted or unsubstituted alkoxy group having 1 to 4 carbon atoms, a cyano group, a substituted or unsubstituted amino group, a hydroxy group, a nitro group, a carboxy group, a substituted or unsubstituted alkylthio group having 1 to 4 carbon atoms, or a substituted or unsubstituted phenylthio group; $R_3$ and $R_4$ represent independently a hydrogen atom, a substituted or unsubstituted alkyl group having 1 to 4 carbon atoms, a substituted or unsubstituted aryl group, a substituted or unsubstituted aralkyl group, or a substituted or unsubstituted alkenyl group; and $R_3$ and $R_4$ may form with the nitrogen atom, to which they are attached, a 5 membered ring or 6 membered ring via a linkage group which may contain a nitrogen atom, an oxygen atom or a sulfur atom.

**2.** The optical recording medium as described in claim 1, wherein the metal in the complex of the azo compound represented by Formula (1) with metal is divalent.

**3.** The optical recording medium as described in claim 1 or 2, wherein recording and reproduction can be carried out at a laser wavelength of 630 to 660 nm using an objective lens having a numerical aperture of $0.6 \pm 0.05$.

European Patent Office

# EUROPEAN SEARCH REPORT

Application Number
EP 98 10 9743

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 483 387 A (MITSUBISHI CHEM IND) 6 May 1992<br>* page 11; examples 18,19,21; table 3 * | 1,2 | G11B7/24 |
| A | * page 17, line 28 - line 32 * | 3 | |
| D,A | EP 0 188 001 A (KURARAY CO) 23 July 1986<br>* page 11, paragraph 4 * | 1,2 | |

TECHNICAL FIELDS SEARCHED (Int.Cl.6)

G11B

The present search report has been drawn up for all claims

| Place of search | Date of completion of the search | Examiner |
|---|---|---|
| THE HAGUE | 1 September 1998 | Philosoph, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)